# EUROPÄISCHE PATENTANMELDUNG

(11) **EP 4 008 168 A1**
(43) Veröffentlichungstag der Anmeldung: **08.06.2022**
(21) Anmeldenummer: 21217048.4
(22) Anmeldetag: 15.10.2014
(51) Int. Cl.: A01C 5/06, A01C 7/06

(54) **SÄMASCHINE MIT MEHRFACHFUNKTIONSWALZE**

(30) Priorität: 15.10.2013 DE 102013111357
(62) Teilanmeldung aus: 14805779.7
(71) Anmelder: Lemken GmbH & Co. KG, 46519 Alpen (DE)
(72) Erfinder: Berendsen, Mark, 7044 AJ Lengel (NL) (NL); Bergerfurth, Dennis, 46459 Rees (DE); Gebbeken, Martin, 46519 Alpen (DE); Geraats, Marcel, 41334 Nettetal (DE); Gotzen, Christian, 41751 Viersen (DE); Lukas, Thomas, 48683 Ahaus-Wüllen (DE); Paeßens, Christian, 47661 Issum (DE); Werries, Dieter, 46519 Alpen (DE)

(57) **Zusammenfassung**

An dem Rahmen 6 einer pneumatischen Einzelkornsämaschine sind in Fahrtrichtung betrachtet Düngerschare und an Schararmen 40 schwenkbar gelagerte Säschare 13 angeordnet. Zwischen diesen befindet sich ein als Walze 15 ausgebildetes Arbeitsgerät, welches zur Rückverfestigung des durch das Düngerschar 12 aufgeworfenen Erdreichs, zur Vorverdichtung von Erdreich zwischen Arbeitsgerät 14 und Säschar 13 sowie als Tiefenführung für die Einzelkornsämaschine ausgebildet ist.

Für die Veröffentlichung ist Figur 1 vorzusehen.

## Beschreibung

Die Erfindung betrifft eine Anordnung von Scharen an dem Rahmen eines landwirtschaftlichen Gerätes, vorzugsweise die Anordnung von Düngerscharen und an Schararmen schwenkbar gelagerten Doppelscheibenscharen an dem Rahmen einer Sämaschine, vorzugsweise einer pneumatischen Sä- oder Einzelkornsämaschine.

Pneumatische Einzelkornsämaschinen werden in der Landwirtschaft eingesetzt, um das Saatgut einzeln und in gleichmäßigen Abständen in den Boden einbringen zu können. Die europäische Patentanmeldung EP2374343A1 zeigt beispielsweise ein Einzelkornsäaggregat einer Einzelkornsämaschine, dem ein federndes Düngerschar vorgelagert ist. Die durch das Düngerschar aufgeworfene Erde beeinträchtigt die Funktion und die Tiefenführung des nachfolgenden Säschars. Das Saatgut wird relativ zur Bodenoberkante bzw. zum durch das Düngerschar abgelegten Düngerband ungenau platziert. Ein unterschiedlicher Auflauf des keimenden Saatgutes und damit einhergehende Ertragseinbußen sind die Folge.

Der vorliegenden Erfindung stellt sich daher die Aufgabe, eine Anordnung von Scharen für eine landwirtschaftlich genutzte Maschine, insbesondere für eine Einzelkornsämaschine zu schaffen, die mit einem Minimum von Aggregaten auskommt und eine optimale Saatgutplazierung zu einem abgelegten Düngerband ermöglicht.

Diese Aufgabe wird dadurch gelöst, dass zwischen Düngerschar und Doppelscheibenschar ein als Walze oder Rolle ausgebildetes Arbeitsgerät angeordnet ist, welches zum Schließen des Düngerschar-Schlitzes sowie zur Rückverfestigung des durch das Düngerschar aufgeworfenen Erdreichs dient.

Zwischen dem Düngerschar und dem als Doppelscheibenschar ausgebildeten Säschar ist ein multifunktionales Arbeitsgerät in Form einer Walze oder Rolle positioniert, das in einer ersten Funktion gewissermaßen nach vorne ausgerichtet den Auswurf des Düngerschars aus der Düngerrille weitgehend auffängt und diesen oberhalb des Düngerbandes wieder rückverfestigt bzw. den Düngerschar-Schlitz wieder schließt.

In einer weiteren Funktion schließlich dient das Arbeitsgerät zur Vorverdichtung von Erdreich vor dem Doppelscheibenschar und ist damit gewissermaßen auch nach hinten wirkend ausgebildet. Damit dient die Walze oder Rolle als vorverdichtendes Werkzeug für das hinter diesem positionierte Doppelscheibenschar und somit zur Saatgutrille. Die Walze erfüllt damit eine vorteilhafte Doppelfunktion in Hinblick auf die Nachverdichtung für das ihr vorgeordnete Düngerschar und die Vorverdichtung des ihr nachgeordneten Doppelscheibenschars.

Schließlich fällt dem Arbeitsgerät ggf. eine weitere wichtige Funktion zu, wenn das Arbeitsgerät als Tiefenführungseinrichtung für die Einzelkornsämaschine ausgebildet ist. In dieser Funktion dient das Arbeitsgerät zugleich als Tiefenführung für die Einzelkornsämaschine und ersetzt damit die Funktion separater Rahmenführungsräder, die nunmehr eingespart werden können.

Ergänzend dazu ist vorgesehen, dass das Arbeitsgerät als Walze mit einer Mehrzahl von über den Umfang der Walze überstehenden bzw. den äußeren Umfang der Walze bildenden, parallelen Ringen ausgerüstet ist. Zwecks Rückverfestigung für das Düngerschar und Vorverdichtung für das Doppelscheibenschar empfiehlt es sich, die Walze mit einer Mehrzahl paralleler Ringe, vorzugsweise mit zwei Ringen auszustatten, welche in ihrer Anordnung und Ausbildung mit der Dünger- bzw. Saatgutrille korrespondieren und insofern die angesprochenen Mehrfachfunktionen maßgeblich beeinflussen und gewährleisten.

In Hinblick auf die Formgebung dieser Ringe kommt vor allem in Frage, dass diese in ihrem Boden wirksamen Bereich einen V-förmigen, U-förmigen oder kreisförmigen Querschnitt aufweisen.

So läuft solch ein Ring zweckmäßigerweise nach außen in Art eines Dachs spitz zu. Zur Verstärkung der beschriebenen Wirkungen ist vorgesehen, dass die Ringe mehrere über ihren Umfang verteilt angeordnete und sich in deren Axialrichtung erstreckende Bodenantriebselemente, vorzugsweise Keile aufweisen. Von den Keilen sind etwa beidseitig zwölf pro Ring gleichmäßig verteilt. Diese Keile verstärken und optimieren die Funktionen im Rahmen des Rück- und Vorverdichtens zusätzlich.

Was die Formgebung der Keile betrifft, ist daran gedacht, dass die Keile als Trapez ausgebildet sind, das sich über die komplette Tiefe der Ringe auf der Walze erstreckt. Die längere Grundseite des Trapezes fällt folglich mit der Innenkante des Rings bzw. mit dem Übergang Ring/Walze zusammen, die kürzere Grundseite der Trapezes mit der spitz zulaufenden Außenkante des Rings.

Eine weitere vorteilhafte Ausführungsform der Erfindung sieht vor, dass die Walze zwei mittig zueinander beabstandete Teilwalzen oder eine mittige Ausnehmung aufweist, in deren Bereich die Düngerschare zumindest mit ihrem rückwärtigen Ende hineinragen. D. h zwei Teilwalzen zueinander oder die zentrale Ausnehmung in der Walze sind so positioniert und dimensioniert, dass die paarweise angeordneten Düngerschare und die Ausnehmung der Walze oder zwischen den beiden Teilwalzen ein Stück weit ineinander greifen. Dies führt zu einem gewissen Reinigungseffekt bzw. zur Verhinderung von Erdreichanlagerungen in diesem Bereich.

Ergänzend dazu ist vorgesehen, dass die Walze an ihre mittige Ausnehmung angrenzend beidseitig oder die Teilwalze an ihrer Innenseite einen Ring aufweist. Von außen nach innen betrachtet ist dieses Arbeitsgerät also so aufgebaut, dass außen ein normaler Walzenabschnitt angeordnet ist, an den sich ein Ring und dann innen die Ausnehmung anschließt.

Eine zusätzliche Ausführungsform der Erfindung sieht vor, dass der Walze eine Anordnung von vorzugsweise zwei Doppelscheibenscharen nachläuft, wobei der im Boden wirksame Bereich der Doppelscheibenschare in etwa den gleichen mittleren Abstand in seitlicher Richtung aufweist wie der mittlere Abstand der Ringe.

Ein weiterer Schwerpunkt der Erfindung liegt darin, dass der Walze eine Anordnung von zwei Doppelscheibenscharen und einer Tiefenführungsrolle nachläuft, bei der die Tiefenführungsrolle in Fahrtrichtung betrachtet zwischen den beiden Doppelscheibenscharen angeordnet ist und die beiden Doppelscheibenschare und die Tiefenführungsrolle eine Drehbewegung in selber Richtung ausüben. Diese Baueinheit in Form zweier Doppelscheibenschare mit einer zwischen diesen positionierten Tiefenführungsrolle ist nach vorne zwischen die beiden Doppelscheibenschare verlagert und dreht in dieselbe Richtung. Die entsprechende Anordnung begünstigt den Auswurf von Erdreich zur Seite, verhindert weitestgehend den Auswurf von Erdreich in die Mitte und schließt damit Verstopfungen praktisch aus.

Ein ergänzender Vorschlag sieht vor, dass die Tiefenführungsrolle und die beiden benachbarten Doppelscheibenschare die Tiefenführungsrolle zumindest annähernd berührend angeordnet oder ausgebildet sind, um die angesprochenen Effekte in noch verbesserter Form zu erreichen.

Besonders vorteilhaft ist diese Anordnung, wenn die Achse des Doppelscheibenschars und die Achse der Tiefenführungsrolle in Fahrtrichtung betrachtet zumindest annähernd auf einer Höhe liegen, maximal also um ein geringes Maß versetzt zueinander positioniert sind.

Um zu gewährleisten, dass Doppelscheibenschar und Tiefenführungsrolle tatsächlich unter Ausnutzung der bereits beschriebenen Vorteile in selber Richtung drehen, ist vorgesehen, dass die Achse des Doppelscheibenschars innerhalb des Umfangs der Tiefenführungsrolle liegt, womit solch eine Gleichführung gewährleistet ist. Alternativ bietet sich an, dass die Achse der Tiefenführungsrolle innerhalb des Umfangs des Doppelscheibenschars liegt, um die angesprochene gleichsinnige Führung beider zu gewährleisten.

Eine weitere Maßnahme sieht vor, dass die Doppelscheibenscharpaare schräg zur Fahrtrichtung angestellt angeordnet sind, um in optimierter Weise ein Eindringen von Erdreich zwischen Scharen und Tiefenführungsrolle zu vermeiden.

Insbesondere ist daran gedacht, dass die beiden ein Doppelscheibenschar bildenden Scheiben in einem unterschiedlichen Neigungsgrad zueinander und/oder zur Fahrtrichtung angestellt angeordnet sind, d. h. die inneren Säscheiben sind in einem kleineren Winkel angestellt als die äußeren.

Eine bevorzugte Ausführungsform sieht dabei vor, dass die inneren Scheiben der jeweiligen Doppelscheibenschare zumindest annähernd parallel zur Rotationsebene der Tiefenführungsrolle angeordnet sind, um im Bereich der Tiefenführungsrolle einen Auswurf von Erdreich zu vermeiden.

Um das Saatgut einzeln und in gleichmäßigen Abständen in den Boden einbringen zu können, empfiehlt es sich, wenn der paarweisen Anordnung von Doppelscheibenscharen eine oder mehrere Kornvereinzelungseinrichtungen zugeordnet sind, speziell wenn die Vereinzelungsvorrichtung durch ein Paar an ihrem Außenrand miteinander verbundener Vereinzelungsteller gebildet ist, die zur Erzeugung einer gespreizten Saatgutreihe in tangentialer Richtung versetzt zueinander angeordnet und separaten Auslässen zur Abführung des Saatgutes aus dem Säherz in Richtung Säschar zugeordnet sind. Eine gespreizte Saatgutreihe erklärt sich dadurch, dass in dieser Reihe abgelegte Saatgutkörner neben einem annähernd gleichmäßigen Längsabstand einen definierten, rechts und links wechselnden lateralen Abstand zur Reihenmitte aufweisen.

Die Erfindung zeichnet sich insbesondere dadurch aus, dass ein multifunktionales Arbeitsgerät für eine landwirtschaftlich genutzte Maschine, speziell für eine pneumatische Einzelkornsämaschine geschaffen ist, das einen einfacheren Aufbau solch einer Maschine gewährleistet, weil ein als Walze oder Rolle ausgebildetes Arbeitsgerät mehrere Funktionen für die Maschine mit übernimmt und somit die Einsparung von Werkzeugen ermöglicht. Das Gerät kann nach vorne wie nach hinten ausgerichtet zur Unterstützung oder Ergänzung der Aggregate dienen. So fallt diesem Arbeitsgerät die Funktion als schließendes Element der Düngerrille zu, welche das vorgeordnete Düngerschar hinterlässt. Außerdem kann das erfindungsgemäße Arbeitsgerät als vorverdichtendes Werkzeug für die Saatgutrille und damit das nachgeordnete Doppelscheibenschar wirken. Damit wird eine kapillare Wasserführung im Boden zum Saatgut verbessert. Gleichzeitig ist durch die Anordnung eine exakte laterale und vertikale Positionierung der Saatgutreihen relativ zu dem durch das Düngerschar abgelegten Düngerband möglich. Dieses verspricht pflanzenbauliche Vorteile in Form eines besseren Saatgutauflaufs, verbesserter Nährstoffaufnahme im Boden und dadurch höherer Pflanzenerträge. Dank einer weiteren Funktion dieses Arbeitsgerätes kann auch eine separate Tiefenführungsvorrichtung eingespart werden.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Figur 1: den Abschnitt einer Sämaschine mit den für die Erfindung besonderen Aggregaten in perspektivischer Ansicht,
- Figur 2: in Seitenansicht,
- Figur 3: eine vergrößerte Darstellung der Ringe und Keile,
- Figur 4: eine Ansicht des Maschinenabschnitts von unten und
- Figur 5: einen Ausschnitt von Figur 4.

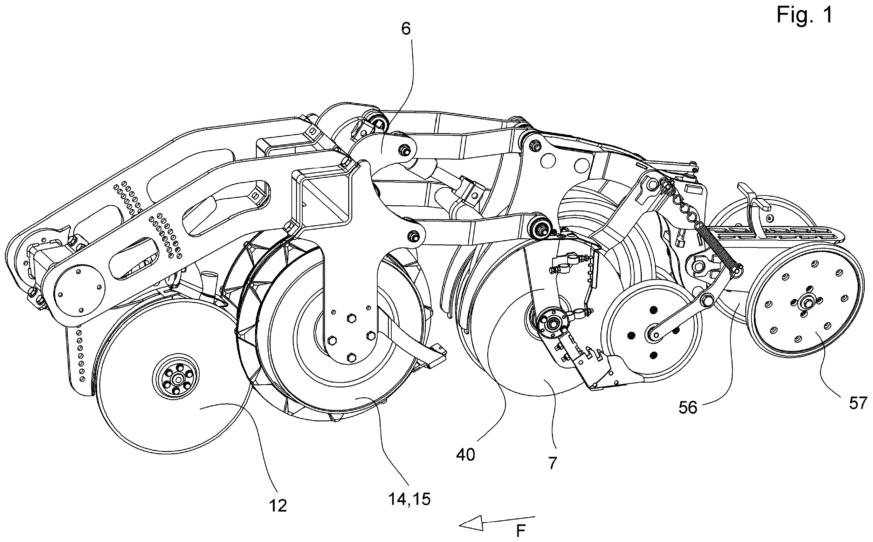

Figur 1 zeigt den Abschnitt einer Einzelkornsämaschine mit dem Rahmen 6, an dem in Fahrtrichtung F betrachtet ein Düngerschar 12, ein als Walze 15 ausgebildetes Arbeitsgerät 14 sowie als Doppelscheibenschare ausgebildete Säschare 7, 8 angeordnet sind, letztere an einem Scharmarm 40 schwenk- und höhenverstellbar sowie mit einer Kraft beaufschlagbar gelagert. An dieses Ensemble schließt sich noch ein Paar von Druckrollen 56, 57 an. Mehrere dieser Rahmen 6 werden seitlich beabstandet an dem nicht weiter dargestellten Rohrrahmen einer Einzelkornsämaschine befestigt. Das Düngerschar 12 ist ein Doppelscheibenschar mit innenliegendem Abgaberohr für flüssigen oder festen Dünger. Das Düngerschar 12 kann beweglich, Feder belastet und/oder höhenverstellbar zum Arbeitsgerät 14 ausgeführt sein. Zudem kann eine Räumeinrichtung zur Beseitigung von Pflanzenresten oder Fremdkörpern dem Düngerschar 12 vorgelagert sein.

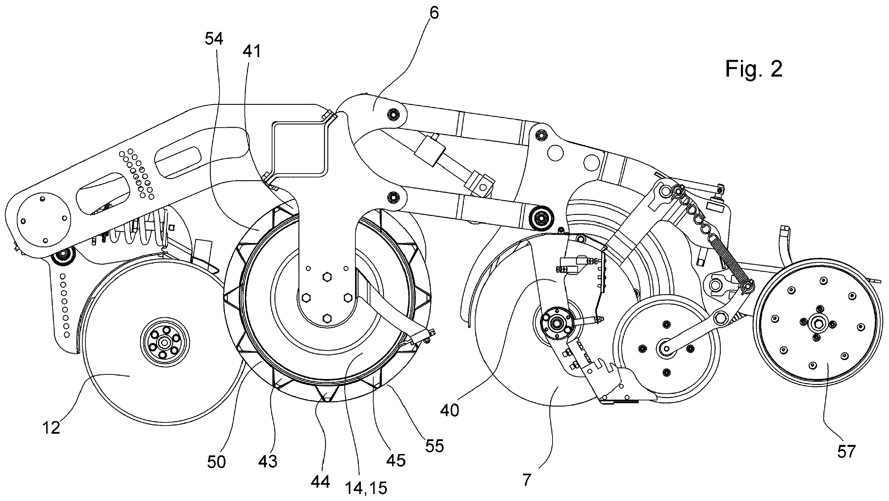

In Seitenansicht ist dieser Rahmen 6 mit den Aggregaten in Figur 2 gezeigt, wobei gut zu erkennen ist, dass das Düngerschar 12 ein Stück weit in die Walze 15 eingreift. Letztere weist zwei über den eigentlichen Umfang 54 der Walze 15 überstehende oder diesen Umfang bildende Ringe auf, von denen hier der linke Ring 41 erkennbar ist. Auf dem Ring 41 sind in seiner und damit auch in Axialrichtung der Walze 15 zwölf Keile angeordnet, die beispielhaft mit den Bezugszeichen 43, 44 und 45 versehen und als Trapez 46, 47, 48 ausgebildet sind, das von innen nach außen betrachtet spitz zuläuft. Zur besseren Übersicht ist eine Scheibe des als Doppelscheibenschar ausgebildeten Säschars 7 in Figur 2 nicht dargestellt.

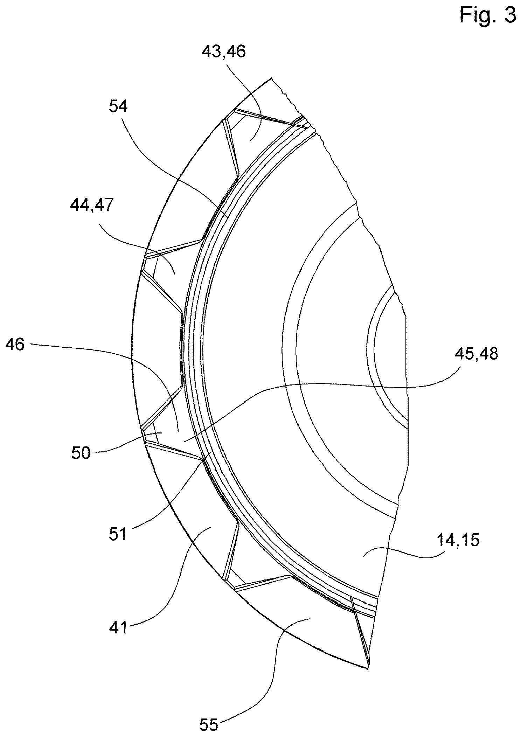

Eine vergrößerte Darstellung von Walze, Ringen und Keilen findet sich in Figur 3. Über den eigentlichen Umfang 54 der Walze 14 erstreckt sich der spitz zulaufende Ring 41 mit einer Vielzahl von hier beispielhaft mit den Bezugszeichen versehenen Keilen 43, 44 und 45. Solch ein Trapez 48 erstreckt sich von seiner längeren Grundseite/Innenkante 51 nach außen spitz zulaufend zu seiner kürzeren Grundseite/Außenkante 50, die wiederum mit dem äußeren Rand 55 des Rings 41 zusammenfällt.

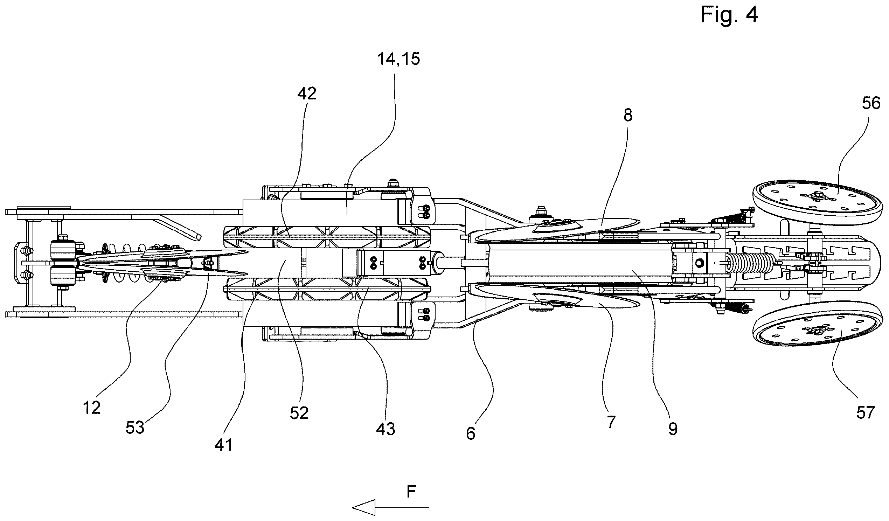

Figur 4 zeigt den Maschinenabschnitt in Ansicht von unten mit einem Blick insbesondere auf den Übergang zwischen Düngerschar 12 und Walze 15. Letztere weist eine zentrale Ausnehmung 52 auf oder besteht aus zwei Teilwalzen, die zur Aufnahme des rückwärtigen Endes 53 der Düngerschare 12 dienen, um einen gegenseitigen Reinigungseffekt zu gewährleisten und Ansammlungen von Erdreich weitgehend auszuschließen. An die Ausnehmung 52 schließt sich beidseitig ein Ring 41, 42 mit dem in den Figuren 2 und 3 ausführlich beschriebenen Profil an. Von diesen Ringen 41, 42 betrachtet nach außen schließt sich dann die eigentliche Walze 15 mit gegenüber den Ringen 41, 42 verringertem Durchmesser an.

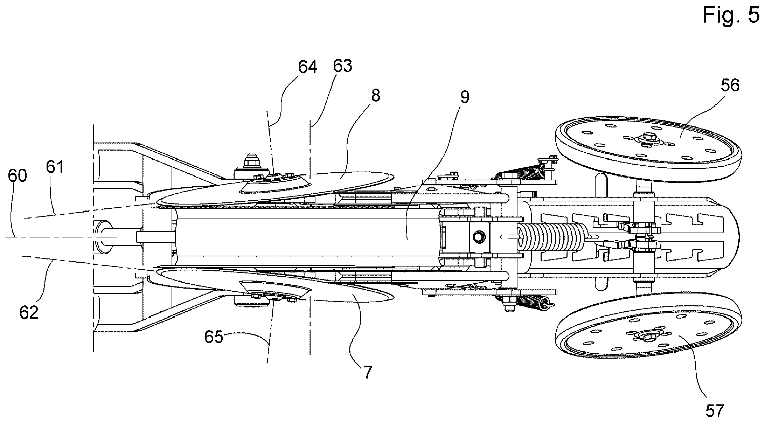

Besser gezeigt ist dieser Geräteabschnitt noch in Figur 5. Die beiden Doppelscheibenschare 7 und 8 sind in Fahrtrichtung nach vorne schräg positioniert, entsprechend sind die Achsen 64, 65 der Doppelscheibenschare 7, 8 bzw. die Achse 63 der Tiefenführungsrolle 9 positioniert. Der Winkel, in dem die Doppelscheibenschare 7, 8 angeordnet sind, entspricht auch dem der Längsachse 60 des Geräteabschnitts zu den beiden Längsachsen 61 und 62 der Doppelscheibenschare 7 und 8.

## Patentansprüche

1. Anordnung von Scharen an dem Rahmen eines landwirtschaftlichen Gerätes, vorzugsweise Anordnung von Düngerscharen (12) und an Schararmen (40) schwenkbar gelagerten Doppelscheibenscharen (7, 8) an dem Rahmen (6) einer Sämaschine, vorzugsweise einer pneumatischen Sä- oder Einzelkornsämaschine,
**dadurch gekennzeichnet,**
**dass** zwischen Düngerschar (12) und Doppelscheibenschar (7, 8) ein als Walze (15) oder Rolle ausgebildetes Arbeitsgerät (14) angeordnet ist, welches zum Schließen des Düngerschar-Schlitzes sowie zur Rückverfestigung des durch das Düngerschar (12) aufgeworfenen Erdreichs dient.

2. Anordnung nach Anspruch 1,
**dadurch gekennzeichnet,**
**dass** das Arbeitsgerät (14) zur Vorverdichtung von Erdreich vor dem Doppelscheibenschar (7, 8) dient.

3. Anordnung nach Anspruch 1,
**dadurch gekennzeichnet,**
**dass** das Arbeitsgerät (14) als Tiefenführungseinrichtung für die Einzelkornsämaschine ausgebildet ist.

4. Anordnung nach Anspruch 1,
**dadurch gekennzeichnet,**
**dass** das Arbeitsgerät (14) als Walze (15) mit einer Mehrzahl von über den Umfang (54) der Walze (15) überstehenden bzw. den äußeren Umfang der Walze (15) bildenden, parallelen Ringen (41, 42) ausgerüstet ist.

5. Anordnung nach Anspruch 1,
**dadurch gekennzeichnet,**
**dass** die Ringe in ihrem Boden wirksamen Bereich eine V-förmigen, U-förmigen oder kreisförmigen Querschnitt aufweisen.

6. Anordnung nach Anspruch 5,
**dadurch gekennzeichnet,**
**dass** die Ringe (41, 42) mehrere über ihren Umfang verteilt angeordnete und sich in deren Axialrichtung erstreckende Bodenantriebselemente, vorzugsweise Keile (43, 44, 45) aufweisen.

7. Anordnung nach Anspruch 6,
**dadurch gekennzeichnet,**
**dass** die Keile (43, 44, 45) als Trapez (46, 47, 48) ausgebildet sind, das sich über die komplette Tiefe der Ringe (41, 42) erstreckt.

8. Anordnung nach Anspruch 1,
**dadurch gekennzeichnet,**
**dass** die Walze (15) zwei mittig zueinander beabstandete Teilwalzen oder eine mittige Ausnehmung (52) aufweist, in deren Bereich die Düngerschare (12) zumindest mit ihrem rückwärtigen Ende (53) hineinragen.

9. Anordnung nach Anspruch 8,
**dadurch gekennzeichnet,**
**dass** die Walze (15) an ihre mittige Ausnehmung (52) angrenzend beidseitig oder eine Teilwalze an ihrer Innenseite einen Ring (41, 42) aufweist.

10. Anordnung nach Anspruch 1,
**dadurch gekennzeichnet,**
**dass** der Walze (15) eine Anordnung von vorzugsweise zwei Doppelscheibenscharen (7, 8) nachläuft, wobei der im Boden wirksame Bereich der Doppelscheibenschare (7, 8) in etwa den gleichen mittleren Abstand in seitlicher Richtung aufweist wie der mittlere Abstand der Ringe (41, 42).

11. Anordnung nach Anspruch 1,
**dadurch gekennzeichnet,**
**dass** der Walze (15) eine Anordnung von zwei Doppelscheibenscharen (7, 8) und einer Tiefenführungsrolle (9) nachläuft, bei der die Tiefenführungsrolle (9) in Fahrtrichtung betrachtet zwischen den beiden Doppelscheibenscharen (7, 8) angeordnet ist und die beiden Doppelscheibenschare (7, 8) und die Tiefenführungsrolle (9) eine Drehbewegung in selber Richtung ausüben.

12. Anordnung nach Anspruch 11,
**dadurch gekennzeichnet,**
**dass** die Achse (36) des Doppelscheibenschars (7, 8) und die Achse (37) der Tiefenführungsrolle (9) in Fahrtrichtung betrachtet zumindest annähernd auf einer Höhe liegen.

13. Anordnung nach Anspruch 11,
**dadurch gekennzeichnet,**
**dass** die Achse (36) des Doppelscheibenschars (7, 8) innerhalb des Umfangs der Tiefenführungsrolle (9) liegt oder dass die Achse (37) der Tiefenführungsrolle (9) innerhalb des Umfangs des Doppelscheibenschars (7, 8) liegt.

14. Anordnung nach Anspruch 11,
**dadurch gekennzeichnet,**
**dass** der paarweisen Anordnung von Doppelscheibenscharen (7, 8) eine oder mehrere Kornvereinzelungseinrichtungen zugeordnet sind.
